# FASCICULE DE BREVET EUROPEEN

(11) **EP 0 548 223 B1**
(45) Date de publication et mention de la délivrance du brevet: **20.07.1994**
(21) Numéro de dépôt: 91916912.8
(22) Date de dépôt: 13.09.1991
(51) Int. Cl.: G01N 27/414

(54) **PROCEDE DE REALISATION D'UNE SURFACE-GRILLE D'UN CAPTEUR ELECTROCHIMIQUE INTEGRE, CONSTITUE D'UN TRANSISTOR A EFFET DE CHAMP ET SENSIBLE AUX ESPECES ALCALINO-TERREUSES ET CAPTEUR OBTENU**
VERFAHREN ZUR REALISIERUNG EINES OBERFLÄCHENGITTERS EINES INTEGRIERTEN ELEKTROCHEMISCHEN SENSORS, BESTEHEND AUS EINEM FELDEFFEKTTRANSISTOR EMPFINDLICH FÜR ERDALKALISCHE SUBSTANZEN SOWIE SENSOR
PROCESS FOR PRODUCING THE SURFACE GATE OF AN INTEGRATED ELECTROCHEMICAL SENSOR, CONSISTING OF A FIELD EFFECT TRANSISTOR SENSITIVE TO ALKALINE-EARTH SPECIES AND SENSOR OBTAINED

(30) Priorité: 14.09.1990 FR 9011586
(43) Date de publication de la demande: 30.06.1993
(73) Titulaire: ECOLE CENTRALE DE LYON, F-69131 Ecully Cédex (FR)
(72) Inventeur: JAFFREZIC-RENAULT, Nicole, F-69130 Ecully (FR); CHOVELON, Jean-Marc, F-69003 Lyon (FR); PERROT, Hubert, F-18110 S.-Martin-d'Auxigny (FR); LE PERCHEC, Pierre, F-69003 Lyon (FR); CHEVALIER, Yves, F-69540 Irigny (FR)
(74) Mandataire: Ropital-Bonvarlet, Claude
(86) Numéro de dépôt international: FR9100723
(87) Numéro de publication internationale: WO9205435

(56) Documents cités:
- EP-A- 0 375 070
- FR-A- 2 600 212
- Patent Abstracts of Japan, vol. 6, No. 195, (P-146)(1073), 5 October 1982 & JP, A, 57104852
- J. Appl. Phys., vol. 51, No. 9, September 1980, M. Aktik et al.: "A new polymer insulted gate field-effect transistor", pages 5055-5057, see page 5055, left-hand column, paragraphs 1, 2

## Description

### DOMAINE TECHNIQUE :

La présente invention est relative aux capteurs chimiques intégrés, contitués d'un transistor à effet de champ dans lequel la grille métallique est remplacée par une membrane sélective de l'espèce ionique à doser et placée en contact avec la solution à analyser.

De tels capteurs résultent de l'évolution ou du développement des propriétés des transistors à effet de champ comprenant, dans un substrat semi-conducteur, deux zones dopées, dénommées source et drain, et, dans une couche d'un matériau diélectrique recouvrant le semi-conducteur et les zones dopées, une zone centrale recouverte d'une grille dont l'alimentation électrique variable permet de moduler le passage du courant entre la source et le drain.

### TECHNIQUE ANTERIEURE :

Dans la Publication **IEEE TRANS. BIOMED. Eng. BME,** 17 (1970) 70, P. **BERGVELD** a proposé de supprimer la grille et de placer directement la surface du matériau diélectrique en contact avec une solution électrolytique contenant des espèces **H⁺** et **OH⁻** et dans laquelle plonge une électrode de polarisation. Pour une polarisation donnée, on obtient un courant de drain représentatif de la concentration de la solution électrolytique. Toute modification de concentration module le courant de drain. Le transistor fonctionne alors en capteur chimique intégré.

Pour élargir le domaine d'application limité au milieu contenant des ions **H**, il a été préconisé d'interposer, entre la solution électrolytique et la surface du matériau diélectrique, une surface-grille iono-sensible. Une telle surface-grille peut être constituée par une membrane organique ou minérale, rapportée par collage, par apport ou par dépôt chimique sous vide. Une telle méthode permet de disposer d'une surface-grille spécifique d'un produit et d'assurer ainsi facilement l'analyse de ce dernier dans un milieu déterminé.

Une telle évolution a apporté un avantage certain par rapport à la solution première, mais ne donne pas entière satisfaction, en raison du vieillissement de la membrane rapportée qui ne permet pas de procurer une fiabilité dans le temps.

En vue de surmonter ce problème, il a été proposé, notamment par la demande **FR-2 600 212 (86-08 989),** de réaliser une surface-grille sensible directement intégrée, en vue de supprimer la présence de la membrane rapportée. Selon cette technique, il est prévu de soumettre directement la surface-grille à un traitement d'hydroxydation, puis à un traitement d'imprégnation avec une solution de silane, puis à un traitement de condensation du silane.

Cette technique donne satisfaction mais peut être considérée comme d'application limitée, en raison de la nécessité de disposer, pour la phase d'imprégnation, d'un silane en solution incorporant le groupement spécifique à la sensibilité devant être conférée à la surface-grille traitée.

Par ailleurs, il a pu être constaté qu'une telle technique ne permettait pas l'obtention de performances maximales, notamment pour certaines sensibilités spécifiques, telles que celles aux espèces alcalino-terreuses et, plus particulièrement, à l'ion calcium.

Or, de tels capteurs font l'objet d'un réel besoin dans de nombreuses applications exigeant une analyse électrochimique et parmi lesquelles il convient de citer l'analyse bio-médicale, l'hydrotimétrie, l'agronomie (analyse de solutions nutritives), l'environnement (analyse des eaux douces et de mer).

### EXPOSE DE L'INVENTION :

La présente invention vise à résoudre le problème ci-dessus en proposant un nouveau procédé de réalisation, sur un capteur électrochimique, d'une surface-grille sélective particulièrement sensible aux espèces alcalino-terreuses et, plus particulièrement, à l'ion calcium, possédant des caractéristiques de fonctionnement fiable dans le temps et permettant une miniaturisation poussée des capteurs en faisant application.

L'invention a également pour objet un capteur électrochimique intégré possédant une surface-grille obtenue par la mise ne oeuvre du procédé.

Pour atteindre les buts ci-dessus, le procédé selon l'invention consiste à :
- réaliser le greffage de la surface avec un produit de greffage, en vue de constituer des greffons sur certains au moins des sites, préparer des molécules iono-sensibles à base de phosphonate,
- fonctionnaliser certains au moins des greffons par les molécules iono-sensibles.

Diverses autres caractéristiques ressortent de la description faite ci-dessous en référence aux dessins annexés qui montrent, à titre d'exemples non limitatifs, des formes de réalisation de l'objet de l'invention.

### BREVE DESCRIPTION DES DESSINS :

La **fig. 1** est une vue schématique d'une étape de fabrication d'un capteur chimique intégré à surface-grille sensible conforme à l'invention.

Les **fig. 2 à 5** sont des courbes illustratives des caractéristiques de structure et de fonction de capteurs selon l'invention.

### MEILLEURE MANIERE DE REALISER L'INVENTION :

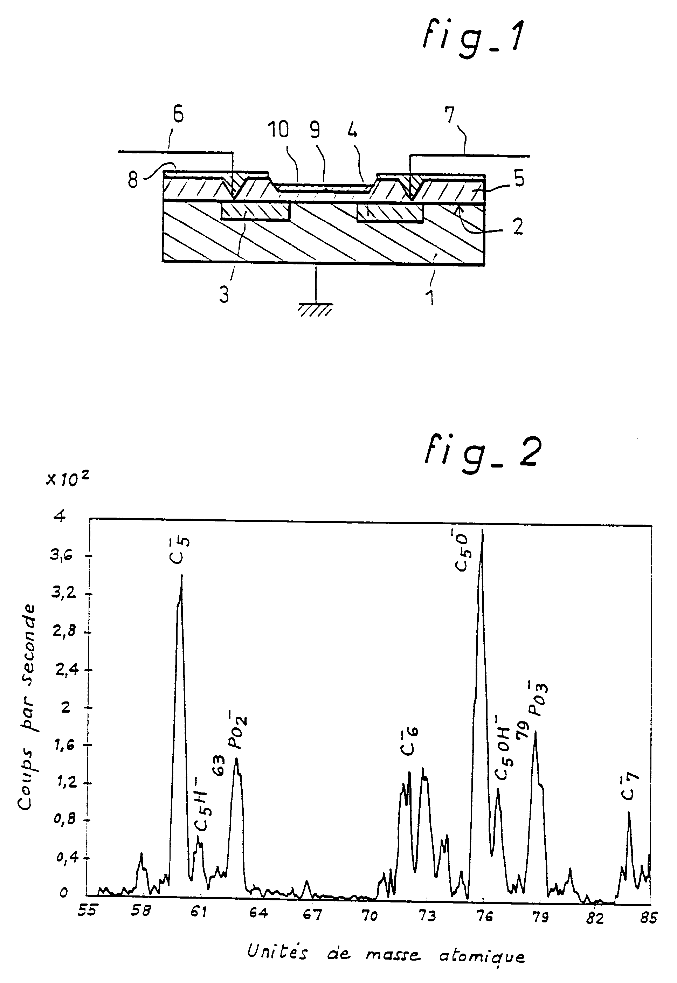

La **fig. 1** montre un capteur chimique intégré comprenant un substrat **1** en un matériau semi-conducteur ayant subi, à partir de la surface **2**, une opération de dopage, en vue de délimiter deux zones **3** et **4** destinées à constituer, respectivement, une source et un drain. La surface **2** est revêtue d'une couche **5** de silice de qualité électronique. La couche **5,** avant ou après l'établissement de contacts **6** et **7** avec la source et le drain, est revêtue d'un masque **8** sur toute sa surface, hormis la partie devant correspondre à l'établissement d'une surface-grille située, en superposition de plans, dans la partie centrale entre la source **3** et le drain **4.**

La partie découverte de la couche **5** peut être utilisée comme telle ou être traitée, de manière à obtenir une couche **9** d'un matériau diélectrique de grille, tel que le nitrure de silicium oxydé ou l'oxynitrure de silicium, d'épaisseur comprise entre 300 et 2 500 Å (30 et 250 nanomètres).

Sur une telle base préparatoire, le procédé selon l'invention fait intervenir différentes phases opératoires dont les principales sont :
- (I) : une phase de greffage de greffons sur certains au moins des sites de la surface **10** de la couche **5** ou **9** de matériau diélectrique de grille,
- (II) : une phase de préparation de molécules iono-sensibles aptes à assurer, ultérieurement, une sensibilité aux espèces alcalino-terreuses et, plus particulièrement, à l'ion calcium
- (III) : une phase de fonctionnalisation de tels greffons par les molécules ionosensibles.

### PHASE (I) :

La phase (**I**) de greffage des greffons comprend, selon une première variante, une étape préparatoire consistant à assurer l'hydroxylation de la surface **10,** en vue d'obtenir de 10¹⁴ à 10¹⁵ sites **OH** par cm² de surface. Cette étape d'hydroxylation peut être conduite par décapage à partir d'une solution aqueuse basique contenant de la soude, à une concentration de 0,1 à 1 M. Cette étape peut être conduite par trempage pendant une durée comprise entre 5 et 30 minutes, la solution de décapage étant maintenue à une température comprise entre 15 et 40° C.

Cette étape d'hydroxylation peut aussi être conduite, dans le cas où la couche **5** est constituée par de la silice seule, par une hydratation consistant à placer la surface **10** en contact avec de l'eau bidistillée maintenue à une température de 95° C. Cette hydratation est poursuivie pendant une durée comprise entre 1 et 48 heures et, préférentiellement, égale à 12 heures.

L'hydroxylation est ensuite suivie d'un lavage de la surface **10** par trempage ou écoulement d'un flux d'eau distillée délivrée à la température ambiante.

Une autre variante d'exécution de la phase (**I**) de greffage d'un greffon consiste, en vue d'obtenir le même nombre de sites **OH**, à assurer l'hydroxylation à partir d'un mélange sulfochromique composé de 1 ml d'une solution de bichromate de potassium saturée et de 20 ml d'acide sulfurique concentré (95-97%). Cette étape peut être conduite par trempage dans la solution d'attaque pendant une durée comprise entre 1 et 5 minutes, la solution d'attaque étant maintenue à une température comprise entre 15 et 35° C.

Cette étape d'hydroxylation peut être conduite en plusieurs étapes :
- trempage dans la solution d'attaque précédemment décrite (mélange sulfochromique) dans les mêmes conditions,
- trempage dans l'eau ultra-pure de résitance 18 megohms pendant une durée comprise entre 10 et 15 heures, à une température comprise entre 15 et 35° C,
- trempage dans la solution d'attaque précédemment décrite (mélange sulfochromique) dans les mêmes conditions.

Un séchage intervient ensuite dans les deux variantes, par exemple au moyen d'un flux de gaz inerte à température ambiante.

L'étape préparatoire est alors terminée et permet le déroulement d'une étape de préparation consistant à soumettre la surface **10** à un dégazage sous vide entre 1 et 5 Pa, de préférence 1 Pa, en chauffant la surface **10** entre 120 et 160° C et, de préférence, à 140° C. Un tel dégazage sous vide s'établit pendant une durée de 1 à 5 heures, de préférence limitée à 2 heures, pour obtenir une surface **10** complètement déshydratée et dégazée.

La phase de greffage proprement dite consiste alors à faite réagir, par trempage, la surface **10** dans un silane pur, mono ou multifonctionnel, un aminosilane, un alkoxysilane ou un halogénosilane, destiné à constituer sur certains au moins des sites des greffons, de formule générale : 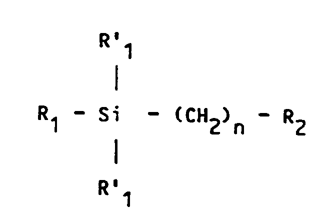
dans laquelle :
- **R₁** est soit :
   . **(CH₃)₂** **-** **N** **-,**
   . **CH₃** **-** **O** **-,**
   . **CH₃** **-** **CH₂** **-** **O** **-,**
   . **Cl** **-,**
- **R′₁** est soit :
   . **CH₃** **-,**
   . **CH₃** **-** **O** **-,**
   . **CH₃** **-** **CH₂** **-** **O** **-,**
- **R₂** est dans tous les cas :
   **.** **-** **Cl,**

afin d'assurer une fontionnalisation ultérieure des greffons.

On greffe le silane en soumettant la surface **10** à un chauffage entre 60 et 80° C pendant une durée de 15 à 48 heures, de préférence 70° C pendant 48 heures, dans une enceinte à pression ambiante, en présence d'un gaz inerte, tel que l'azote ou l'argon.

On procède ensuite à un lavage de la surface greffée **10** avec un solvant du silane en excès, tel que l'éther, le tétrahydrofurane, par trempage ou écoulement à température ambiante et, de préférence, en renouvelant une à quatre fois le solvant. On obtient un taux de greffage des sites **OH** compris entre 1 et 50 % des sites présents.

On soumet ensuite la surface **10** greffée à un séchage sous flux d'un gaz inerte à température ambiante.

Un exemple de mise en oeuvre de cette phase de greffage d'un chloropropyldiméthyl chlorosilane est illustré ci-dessous par les formules **(i)** et **(ii).**

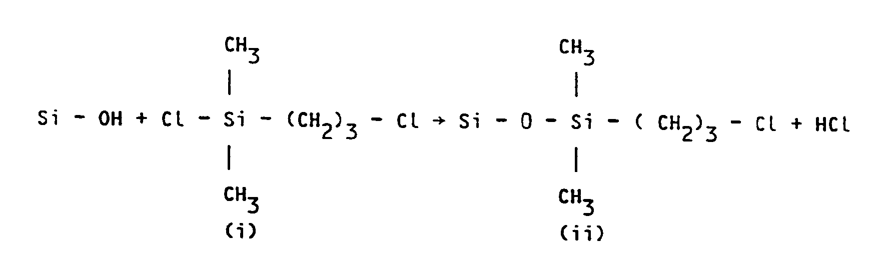

### PHASE (II)

La phase (**II**) de préparation de molécules iono-sensibles consiste à conférer à ces molécules les caractéristiques suivantes :
a) - présence d'un groupement **(CH₃)₂** **-** **N** **-** servant à assurer la réaction chimique de fonctionnalisation du greffon sur la surface grille **10** traitée,
b) - présence d'un groupement espaceur **-** **(CH₂)**_{**n**} **-,**
c) - présence d'un groupement contenant des liaisons phosphore-oxygène et choisi parmi :
   . le phosphonate **-** **PO₃²⁻**
   . l'éthylphosphonate **-** **PO₃Et⁻**
   . le phosphate **-** **O** **-** **PO₃²⁻**

On donne ci-après des exemples de préparation de molécules iono-sensibles.

### Exemple 1 :

### 3 - Diméthylamino propylphosphonate de sodium :

On porte à 150° C, penoant 30 minutes, un mélange de 668 g (3,3 moles) de 1,3 - dibromopropane et de 55 g (0,33 mole) de triéthylphosphite. L'excès de 1-3- dibromopropane est distillé sous vide et permet d'obtenir un produit intermédiaire (**A**) de 85 g (0,33 mole) de formule :

**Br** **-** **(CH₂)₃** **-** **PO₃** **Et₂**

Un mélange de 85 g de (**A**) et de 75 g (0,66 moles) de diméthylamine en solution aqueuse à 40 % et de 48 g (0,33 moles) de carbonate de potassium est porté à 60° C pendant 12 heures. Les parties insolubles sont filtrées et le solvant évaporé sous vide. Une extraction eau-éther permet d'isoler dans la phase éther 49 g (0,22 moles) d'un produit (**B**) de formule

**(CH₃)₂** **-** **N** **-** **(CH₂)₃** **-** **PO₃** **Et₂**

On effectue ensuite une hydrolyse acide du produit (**B**) en le portant à reflux dans une solution à 48 % d'acide bromnydrique pendant 20 heures. On évapore le solvant, puis on neutralise, avec une solution de soude, le résidu jusqu'à neutralisation complète (**pH** ≃ 12), pour obtenir les molécules iono-sensibles de formule :

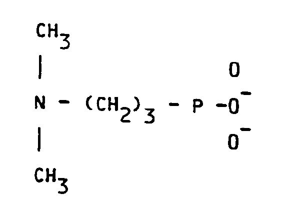

### Exemple 2 :

### Diméthylamino méthylphosphonate de sodium

Une solution de 21,6 g (0,48 mole) de diméthylamine dans 70 g d'éthanol anhydre est faite par barbotage de la diméthylamine gazeuse dans l'éthanol. On y ajoute 14,4 g (0,48 mole) de paraformaldéhyde et 66,2 g (0,48 mole) de diethylphosphite, et le mélange est porté à 70° C pendant 2 heures.

Une hydrolyse acide est faite en portant à reflux le mélange dans une solution d'acide bromhydrique 48 % pendant 20 heures. Après évaporation du solvant, le résidu est neutralisé par une solution de soude jusqu'à neutralisation complète (**pH** ≃ 12) et constitue les molécules iono-sensibles de formule :

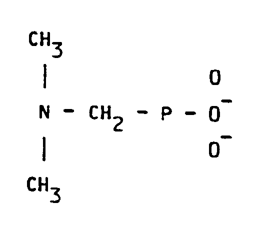

### PHASE (III) :

La phase (**III**) de fonctionnalisation du greffon consiste a mettre environ 0,5 g des molécules iono-sensibles selon l'**exemple** **1** ou **2** dans 40 ml de méthanol pour obtenir un mélange réactif de sensibilisation. La surface **10**, traitée comme dit précédemment, est mise en contact avec le mélange qui est porté à reflux du méthanol, c'est-à-dire à environ 65° C pendant une durée de 1 à 5 jours.

La surface **10** est ensuite rincée à l'eau et séchée sous flux d'un gaz inerte à température ambiante. On obtient un taux de fonctionnalisation de 1 à 100 **%** des sites greffés.

Selon une variante, 100 à 500 mg d'iodure de sodium sont additionnés au mélange pour accélérer la réaction ou augmenter le taux de fonctionnalisation.

Une surface **10,** traitée selon les trois phases ci-dessus avec des molécules iono-sensibles selon l'**exemple 1,** a fait l'objet d'un essai de caractérisation au moyen d'un spectromètre de masse d'ions secondaires, à haute résolution latérale, équipé pour l'imagerie électronique et pour l'analyse des isolants et à même d'atteindre une profondeur d'analyse de l'odre de 10 à 20 Å (1 à 2 nanomètres).

Un tel spectromètre était du type **SIMS-LAB** fabriqué par **VG INTRUMENT** équipé d'une source **MIG 300.**

L'essai d'analyse élémentaire en extrême surface a été conduit sur une surface carrée de 20 micromètres de côté. La densité du courant appliquée a été de l'ordre de 10⁻⁷ A/cm², en vue de créer une vitesse d'abrasion très faible, tout en disposant d'une sensibilité suffisante pour une détection des espèces ioniques caractéristiques du chlore et du phosphore.

La courbe lissée obtenue, illustrée par la **fig. 2,** permet de constater la mise en évidence des espèces ioniques du phosphore apportées sur la surface **10** par le procédé de traitement de l'invention.

Un transistor à effet de champ, pourvu d'une surface **10** traitée comme ci-dessus selon l'un ou l'autre des **exemples 1** et **2,** a été essayé en sensibilité dans un milieu de test constitué, pour les valeurs acides de **pH,** par un mélange d'acide acétique 0,01 M, d'acétate de sodium 0,01 M et de nitrate de sodium 0,1 M dans la quantité suffisante d'eau et, pour les valeurs basiques de **pH** par du tris hydroxyméthylaminométhane à 2 % avec **KCl** 0,5 M.

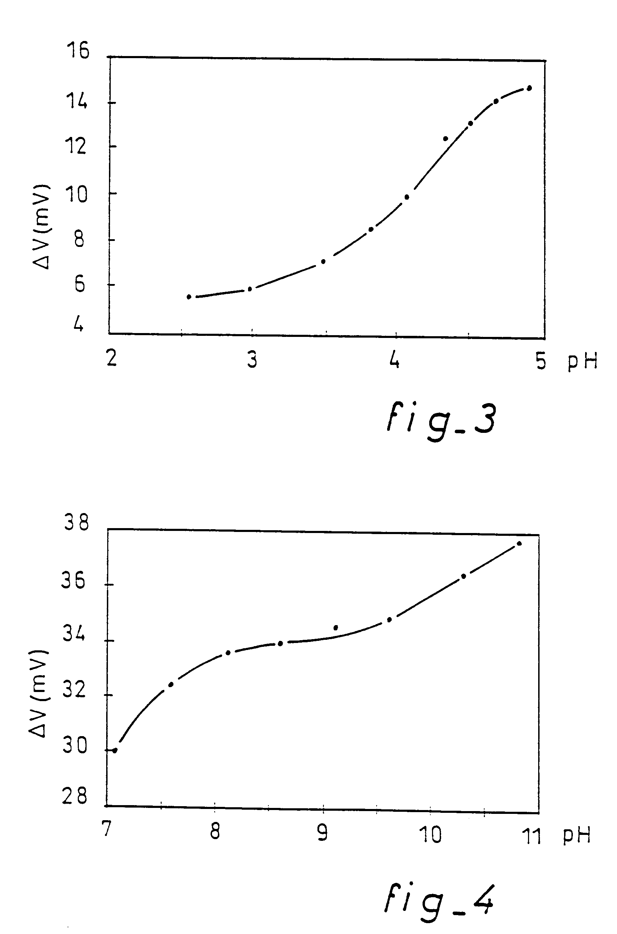

Les **fig. 3** et **4** montrent les courbes caractéristiques de réponse obtenues faisant apparaître deux zones d'inflexion aux environs de **pH** 3,5 - 4 et 8, caractéristiques de la sensibilité de la surface-grille greffée et fonctionnalisée.

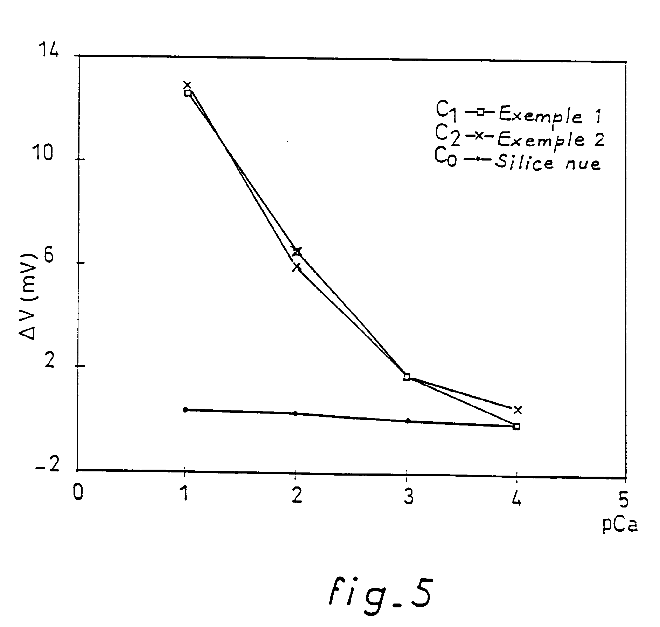

La **fig. 5** met en évidence les courbes de réponse à l'ion calcium dans une solution de tris hydroxyméthylaminométhane à 2 % avec **KCl** 0,5 M à **pH** 10, les capteurs **C₁** et **C₂** préparés selon les **exemples 1** et **2** par comparaison avec un capteur **C₀** dont la surface **10** est constituée du diélectrique de base non traité. Cette figure met en évidence une sensibilité élevée pouvant être considérée comme voisine pour les capteurs **C₁** et **C₂.**

### POSSIBILITE D'APPLICATION INDUSTRIELLE :

Un capteur obtenu par la mise en oeuvre selon l'invention trouve une application typique à la détermination du degré hydrotimétrique.

L'invention n'est pas limitée aux exemples décrits et représentés, car diverses modifications peuvent y être apportées sans sortir de son cadre.

## Revendications

1. Procédé de réalisation d'une surface-grille d'un capteur électrochimique intégré, constitué d'un transistor à effet de champ comprenant, d'une part, deux zones dopées destinées à représenter, respectivement, une source et un drain et, d'autre part, une surface médiane sur laquelle doit être formée la surface-grille, procédé du type consistant à soumettre ladite surface médiane à un traitement d'hydroxylation pour obtenir 10¹⁴ à 10¹⁵ sites **OH** par cm², à laver et sécher la surface,
caractérisé en ce qu'il consiste à :
- réaliser le greffage de la surface avec un produit de greffage en vue de constituer des greffons sur certains au moins des sites,
- préparer des molécules iono-sensibles à base de phosphonate,
- fonctionnaliser certains au moins des greffons par les molécules iono-sensibles.

2. Procédé selon la revendication **1,** caractérisé en ce que le produit de greffage est choisi parmi le silane pur ou les aminosilane, alkoxysilane, halogénosilane, de formule générale 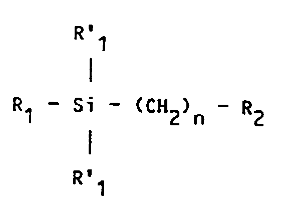 dans laquelle :
- **R₁** est soit :
. **(CH₃)₂** **-** **N** **-,**
. **CH₃** **-** **O** **-,**
. **CH₃** **-** **CH₂** **-** **O** **-,**
. **Cl** **-,**
- **R′₁** est soit :
. **CH₃** **-,**
. **CH₃** **-** **O** **-,**
. **CH₃** **-** **CH₂** **-** **O** **-,**
- **R₂** est dans tous les cas :
**.** **-** **Cl.**

3. Procédé selon la revendication 1 ou 2, caractérisé en que la phase de greffage fait intervenir une étape d'hydroxylation, une étape préparatoire de dégazage sous vide et une étape de réaction par trempage en présence du produit de greffage.

4. Procédé selon le revendication 3, caractérisé en ce que l'étape préparatoire de dégazage consiste à chauffer la surface entre 120 et 160° C pendant une durée de 1 à 5 heures, sous vide.

5. Procédé selon la revendication 3, caractérisé en ce que l'étape de réaction consiste à soumettre la surface à un trempage dans le produit de greffage à base de phosphonate, à soumettre la surface à un chauffage entre 60 et 80° C pendant une durée de 15 à 48 heures dans une enceinte à pression ambiante en présence d'un gaz neutre, à laver puis à sécher la surface.

6. Procédé selon la revendication 1, caractérisé en ce que la phase de préparation des molécules iono-sensibles consiste à conférer à chaque molécule constitutive la présence d'un groupement **(CH₃)₂** **-** **N** **-,** d'un groupement espaceur **-** **(CH₂)**_{**n**} **-** d'un groupement contenant des liaisons phosphore-oxygène et choisi parmi le phosphonate, l'éthylphosphonate, le phosphate.

7. Procédé selon les revendications 1 à 6, caractérisé en ce que le produit de greffage répond à l'une des formules suivantes :

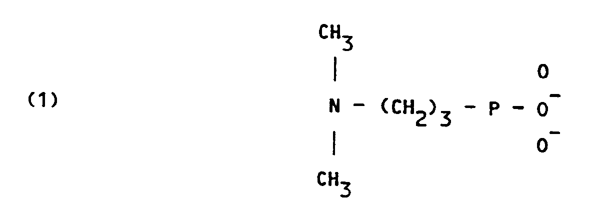

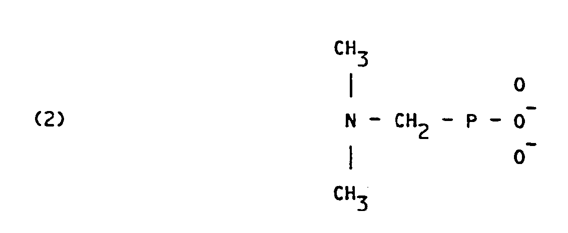

8. Procédé selon la revendication 1, caractérisé en ce que la phase de fonctionnalisation consiste à mettre environ 0,5 g de molécules iono-sensibles dans 40 ml de méthanol et à porter la surface en contact avec ce mélange, pendant une durée comprise entre 1 à 5 jours, à une température de reflux.

9. Procédé selon la revendication 8, caractérisé en ce qu'il consiste à ajouter aux molécules iono-sensible de 100 à 500 mg d'iodure de sodium.

10. Capteur électrochimique intégré constitué d'un transistor à effet de champ, comprenant une surface-grille réalisée suivant le procédé selon l'une des revendications 1 à 9 et caractérisé en ce que sa courbe de réponse au **pH** fait apparaître deux zones d'inflexion entre **pH** 3 et 4 et **pH** 7 et 8, caractéristiques de la présence de molécules iono-sensibles à base de phosphonate.

## Patentansprüche

1. Verfahren zur Herstellung einer Oberflächen-Gateelektrode eines integrierten elektrochemischen Sensors, der aus einem Feldeffekttransistor besteht, der einerseits zwei dotierte Bereiche, welche die Source bzw. den Drain darstellen sollen, und andererseits eine in der Mitte liegende Oberfläche aufweist, auf der die Oberflächen-Gateelektrode erzeugt werden soll, wobei die in der Mitte liegende Oberfläche einer Hydroxylierungsbehandlung unter Erhalt von 10¹⁴ bis 10¹⁵ OH-Stellen pro cm² unterzogen und anschließend gewaschen und getrocknet wird,
dadurch **gekennzeichnet**, daß es folgende Schritte umfaßt:
- Durchführung der Pfropfung der Oberfläche mit einer Pfropfverbindung zur Erzeugung von Pfropfzweigen an mindestens bestimmten OH-Stellen,
- Herstellung von ionensensitiven Molekülen auf Phosphonatbasis,
- Funktionalisierung von mindestens bestimmten Pfropfzweigen mit den ionensensitiven Molekülen.

2. Verfahren nach Anspruch 1,
dadurch gekennzeichnet, daß
die Pfropfverbindung unter Silan selbst sowie Aminosilanen, Alkoxysilanen und Halogensilanen der allgemeinen Formel 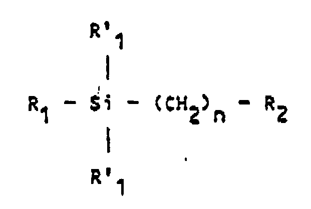 ausgewählt wird, worin bedeuten;
- R₁
(CH₃)₂-N-,
CH₃-O-,
CH₃-CH₂-O- oder
Cl-,
- R′₁
CH₃-,
CH₃-O- oder
CH₃-CH₂-O- und
- R₂
stets Cl.

3. Verfahren nach Anspruch 1 oder 2,
dadurch gekennzeichnet, daß
die Pfropfung einen Hydroxylierungsschritt, einen vorbereitenden Schritt der Entgasung im Vakuum und einen Reaktionsschritt unter Eintauchen in Gegenwart der Pfropfverbindung umfaßt.

4. Verfahren nach Anspruch 3,
dadurch gekennzeichnet, daß
der vorbereitende Schritt der Entgasung darin besteht, daß die Oberfläche 1 bis 5 h im Vakuum auf 120 bis 160 °C erhitzt wird.

5. Verfahren nach Anspruch 3,
dadurch gekennzeichnet, daß
der Reaktionsschritt in folgenden Schritten besteht:
- Eintauchen der Oberfläche in die Pfropfverbindung auf Phosphonatbasis,
- Erhitzen der Oberfläche auf 60 bis 80 °C über einen Zeitraum von 15 bis 48 h in einem Behälter bei Umgebungsdruck in Gegenwart eines inerten Gases und
- Waschen und anschließendem Trocknen der Oberfläche.

6. Verfahren nach Anspruch 1,
dadurch gekennzeichnet, daß
in der Stufe der Herstellung der ionensensitiven Moleküle jedes Grundmolekül mit einer Gruppe (CH₃)₂N-, einer Spacer-Gruppe -(CH₂)ₙ- und einer Gruppe versehen wird, die Phosphor-Sauerstoff-Bindungen enthält und unter Phosphonat, Ethylphosphonat und Phosphat ausgewählt ist.

7. Verfahren nach den Ansprüchen 1 bis 6,
dadurch gekennzeichnet, daß
die Pfropfverbindung einer der folgenden Formeln entspricht:

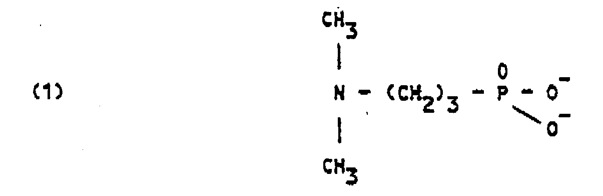

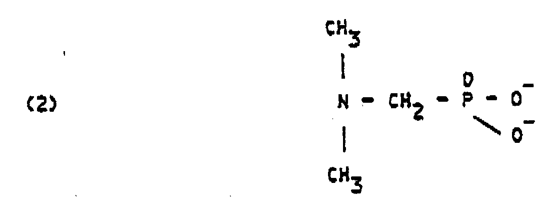

8. Verfahren nach Anspruch 1,
dadurch gekennzeichnet, daß
in der Stufe der Funktionalisierung etwa 0,5 g ionensensitive Moleküle in 40 ml Methanol gegeben werden und die Oberfläche während eines Zeitraums von 1 bis 5 Tagen bei der Rückflußtemperatur mit diesem Gemisch in Kontakt gebracht wird.

9. Verfahren nach Anspruch 8,
gekennzeichnet durch
Zugabe von 100 bis 500 mg Natriumiodid zu den ionensensitiven Molekülen.

10. Integrierter elektrochemischer Sensor, der aus einem Feldeffekttransistor besteht und eine Oberflächen-Gateelektrode aufweist, die nach dem Verfahren nach einem der Ansprüche 1 bis 9 hergestellt und
dadurch gekennzeichnet ist, daß
die pH-Ansprechkurve zwei Bereiche mit Wendepunkten zwischen pH 3 und 4 und pH 7 und 8 aufweist, die charakteristisch sind für das Vorliegen von ionensensitiven Molekülen auf Phosphonatbasis.

## Claims

1. Process for making a surface gate of an integrated electrochemical sensor, constitued by a field-effect transistor comprising, on the one hand, two doped zones intended to represent, respectively, a source and a drain and, on the other hand, a median surface on which must be formed the surface gate, process of the type consisting in subjecting said median surface to a treatment of hydroxylation in order to obtain 10¹⁴ to 10¹⁵ OH sites per cm², in washing and drying the surface,
characterized in that it consists in:
- effecting grafting of the surface with a grafting product, with a view to constituting grafts of at least certain of the sites,
- preparing phosphonate-based iono-sensitive molecules,
- making operative at least certain of the grafts by the iono-sensitive molecules.

2. Process according to claim 1, characterized in that the grafting product is selected from pure silane or aminosilane, alkoxysilane, halosilane, of general formula: 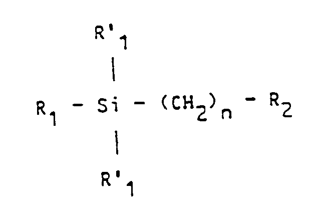 in which:
- R₁ is either:
. (CH₃)₂ - N -,
. CH₃ - O -,
. CH₃ - CH₂ - O -
. Cl -,
- R′₁ is either:
. CH₃ -,
. CH₃ - O -,
. CH₃ - CH₂ - O -,
- R₂ is in all cases:
. - Cl,

3. Process according to claim 1 or 2, characterized in that the grafting phase employs a step of hydroxylation, a preparatory step of degassing in vacuo and a step of reaction by immersion in the presence of the grafting product.

4. Process according to claim 3, characterized in that the preparatory step of degassing consists in heating the surface between 120 and 160°C for a duration of 1 to 5 hours in vacuo.

5. Process according to claim 3, characterized in that the reaction step consists in subjecting the surface to an immersion in the grafting product based on phosphonate, in subjecting the surface to a heating between 60 and 80°C for a duration of 15 to 48 hours in an enclosure at ambient pressure in the pressure of a neutral gas, in washing then in drying the surface.

6. Process according to claim 1, characterized in that the phase of prepartion of the iono-sensitive molecules consists in conferring to each constituent molecule the presence of a group (CH₃)₂ - N -, of a spacer group - (CH₂)ₙ ₋, of a group containing phosphorus-oxygen bonds and selected from phosphonate, ethylphosphonate, phosphate.

7. Process according to claims 1 to 6, characterized in that the grafting product has one of the following formulae:

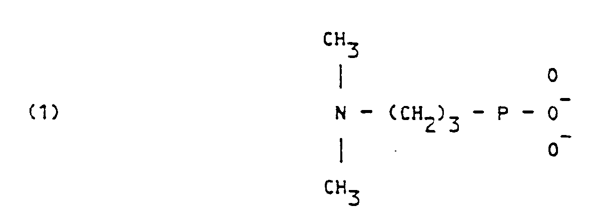

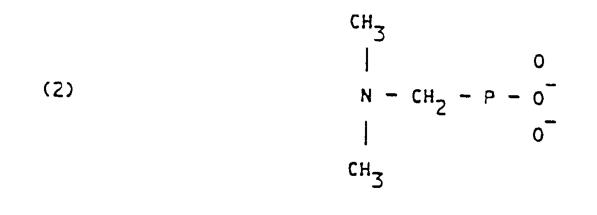

8. Process according to claim 1, characterized in that the phase of making operative consists in placing about 0.5 g of iono-sensitive molecules in 40 ml of methanol and in taking the surface in contact with this mixture, for a duration included between 1 to 5 days, to a reflux temperature.

9. Process according to claim 8, characterized in that it consists in adding to the iono-sensitive molecules from 100 to 500 mg of sodium iodide.

10. Integrated electrochemical sensor constituted by a field-effect transistor, comprising a surface gate made in accordance with the process according to one of claims 1 to 9 and characterized in that its pH response curve shows two zones of inflexion between pH 3 and 4 and pH 7 and 8, characteristics of the presence of phosphonate-based iono-sensitive molecules.
